# EUROPÄISCHE PATENTSCHRIFT

(11) **EP 0 844 164 B1**
(45) Veröffentlichungstag und Bekanntmachung des Hinweises auf die Patenterteilung: **24.01.2001**
(21) Anmeldenummer: 97119947.6
(22) Anmeldetag: 14.11.1997
(51) Int. Cl.: B62D 21/15, B62D 25/08

(54) **Karosserievorderbau für ein Kraftfahrzeug**
Front structure for a motor vehicle
Structure avant pour un véhicule automobile

(30) Priorität: 20.11.1996 DE 19647928
(43) Veröffentlichungstag der Anmeldung: 27.05.1998
(73) Patentinhaber: ADAM OPEL AG, 65423 Rüsselsheim (DE)
(72) Erfinder: Mildner, Udo, Dipl.-Ing. (FH), 65550 Limburg (DE)
(74) Vertreter: Bergerin, Ralf, Dipl.-Ing.

(56) Entgegenhaltungen:
- EP-A- 0 204 131
- EP-A- 0 437 780
- DE-A- 4 209 879
- DE-U- 7 618 270

## Beschreibung

Die Erfindung betrifft einen Karosserievorderbau für ein Kraftfahrzeug, bei dem von A-Säulen jeweils zwei Radeinbaustreben nach vorn führen, die an ihrem vorderen Ende durch ein Frontblech miteinander verbunden sind, welches zwei seitliche Scheinwerferausnehmungen aufweist.

Die heute üblichen Personenkraftwagen weisen einen Karosserievorderbau der vorstehenden Art auf, so daß ein solcher Karosserievorderbau allgemein bekannt ist. Bei dem bekannten Karosserievorderbau werden die Radeinbaustreben durch ein durchgehendes Frontblech miteinander verbunden, welches nach oben hin von einem U-Profil abgedeckt wird, in welchem das Schloß zum Verriegeln der Motorhaube angeordnet ist.

In letzter Zeit gewinnt die Steifigkeit des Karosserievorderbaus bei einem seitlich versetzten Frontalaufprall (Offsetcrash) zunehmend an Bedeutung. Die dabei wirkenden Kräfte werden bei den bisherigen Ausführungen eines Karosserievorderbaus nur dann ausreichend aufgenommen, wenn er aus relativ dickwandigen Blechen und dadurch steif ausgebildet ist. Einer solchen stabilen Ausführungsform steht jedoch der Wunsch nach einem geringen Fahrzeuggewicht und nach einer zur Erreichung möglichst geringer Verzögerungswerte für die Fahrzeuginsassen optimalen Verformungsarbeit gegenüber.

Der Erfindung liegt das Problem zugrunde, einen Kraftfahrzeugvorderbau der eingangs genannten Art so auszubilden, daß bei einem Offsetcrash die Kräfte optimal in die Fahrzeugstruktur eingeleitet werden und deshalb der Kraftfahrzeugvorderbau möglichst leicht ausgebildet sein kann.

Dieses Problem wird erfindungsgemäß dadurch gelöst, daß das Frontblech aus zwei zumindest im oberen Bereich als geschlossenes Kastenprofil ausgebildeten, jeweils mit einer Radeinbaustrebe verschweißten und eine Scheinwerferausnehmung aufweisenden Frontblech-Seitenteilen und einem die Frontblech-Seitenteile miteinander verbindenden, nach dem Einschweißen der Frontblech-Seitenteile einzubauenden Mittelteil besteht.

Durch diese Gestaltung ergibt sich bei einem Offsetcrash eine frühzeitige Kraftübertragung in den über die Radeinbaustreben und den Radeinbau führenden Lastpfad. Weiterhin können die Einbautoleranzen für die Frontscheinwerfer grober als bisher werden, da alle Anschlußteile in einer Baugruppe miteinander verbunden werden können. Auch in vertikaler Richtung ergibt sich dank der Erfindung eine gute Kraftübertragung.

Das Mittelteil könnte durch Schweißen mit den Frontblech-Seitenteilen verbunden werden. Für Reparaturzwecke ist es jedoch besonders vorteilhaft, wenn das Mittelteil mit den Frontblech-Seitenteilen verschraubt ist.

Für einen versetzten Frontalaufprall besonders günstig ist es, wenn die Frontblech-Seitenteile zur Fahrzeugmitte hin weiter nach vorn ragen als zur Fahrzeugseite.

Die Erfindung ist mit verhältnismäßig geringem Aufwand zu verwirklichen, wenn das geschlossene Kastenprofil durch Aufschweißen eines im Querschnitt trapezförmigen Verstärkungsprofils auf ein in einer vertikalen Ebene verlaufendes Seitenblech des Frontblech-Seitenteils gebildet ist.

Eine besonders gute Kraftübertragung in vertikaler Richtung ergibt sich gemäß einer anderen Weiterbildung der Erfindung, wenn das Verstärkungsprofil jeweils an der Seite der Radeinbaustrebe und an der zur Fahrzeugmitte hin weisenden Seite einen schräg nach unten gerichteten Bereich hat. Solche in Vertikalrichtung verlaufenden Kräfte treten auf, wenn man die Motorhaube besonders schwungvoll zuschlägt.

Die Erfindung läßt verschiedene Ausführungsformen zu. Eine davon ist in der Zeichnung dargestellt und wird nachfolgend beschrieben. Diese zeigt schematisch in
- Fig. 1:: eine perspektivische Ansicht einer linken Radeinbaustrebe mit einem erfindungsgemäßen Frontblech-Seitenteil,
- Fig. 2:: einen senkrechten Schnitt durch einen in Figur 1 mit II gekennzeichneten Bereich des Frontblech-Seitenteils,
- Fig. 3:: ein Mittelteil des Frontbleches.

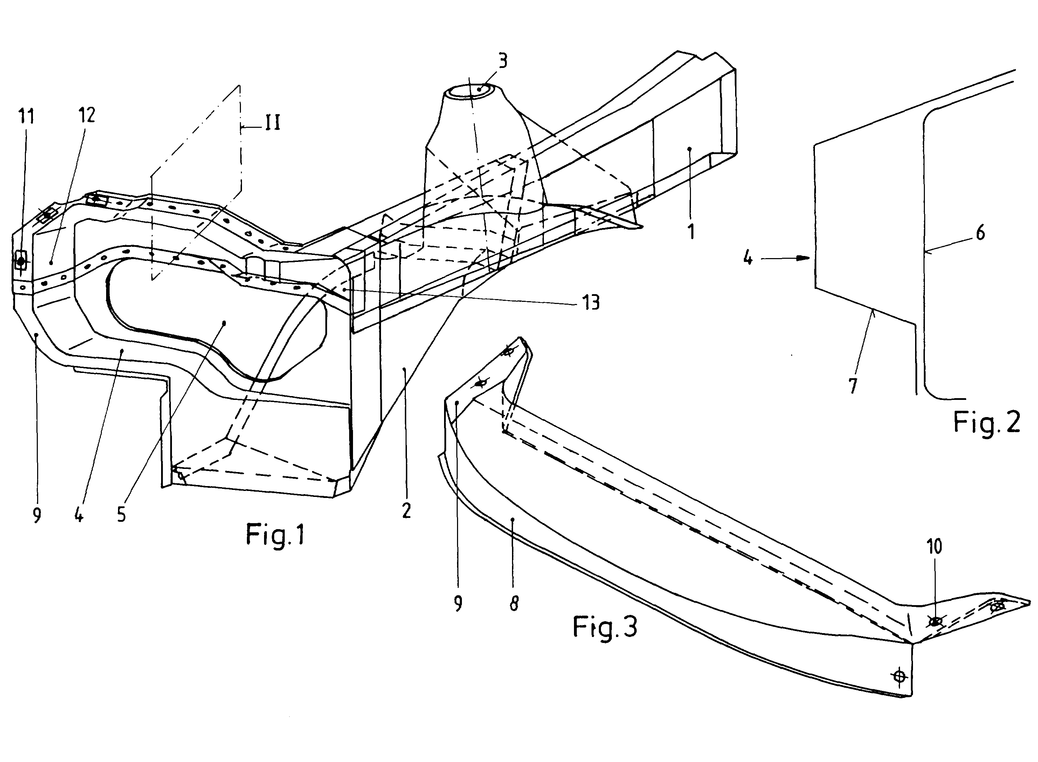

Die Figur 1 zeigt eine Radeinbaustrebe 1, welche mit einem Radeinbau 2 verschweißt ist. Auf dem Radeinbau 2 erkennt man innenseitig zur Radeinbaustrebe 1 und diese nach oben hin überragend einen Federbeindom 3, welcher der Abstützung des oberen Endes eines Federbeins dient.

Das vordere Ende der Radeinbaustrebe 1 und des Radeinbaus 2 ist mit einem Frontblech-Seitenteil 4 verschweißt, welches rahmenartig eine Scheinwerferausnehmung 5 umfaßt. Wichtig für die Erfindung ist, daß der obere Bereich des Frontblech-Seitenteils 4 als geschlossenes Kastenprofil ausgebildet ist, was die Figur 2 verdeutlicht.

Die Figur 2 zeigt von dem Seitenteil 4 ein in einer vertikalen Ebene verlaufendes Seitenblech 6, gegen welches von vorn her ein im Querschnitt trapezförmiges Verstärkungsprofil 7 geschweißt ist. Wie in Verbindung mit Figur 1 zu erkennen ist, hat das Verstärkungsprofil 7 an der Seite der Radeinbaustrebe 1 und zur Fahrzeugmitte hin jeweils einen nach unten geführten Bereich 12, 13.

Die Figur 3 zeigt ein Mittelteil 8, welches zusammen mit dem Frontblech-Seitenteil 4 und einem entsprechenden Frontblech-Seitenteil auf der rechten Fahrzeugseite ein Frontblech 9 bildet. Dieses Mittelteil 8 hat Löcher 10, welche es aufgrund entsprechender Löcher 11 in den Frontblech-Seitenteilen 4 ermöglichen, das Mittelteil 8 durch Schrauben mit den Frontblech-Seitenteilen 4 zu verschrauben.

## Patentansprüche

1. Karosserievorderbau für ein Kraftfahrzeug, bei dem von A-Säulen jeweils zwei Radeinbaustreben (1) nach vorn führen, die an ihrem vorderen Ende durch ein Frontblech (9) miteinander verbunden sind, welches zwei seitliche Scheinwerferausnehmungen (5) aufweist, **dadurch gekennzeichnet**, daß das Frontblech (9) aus zwei zumindest im oberen Bereich als geschlossenes Kastenprofil ausgebildeten, jeweils mit einer Radeinbaustrebe (1) verschweißten und eine Scheinwerferausnehmung (5) aufweisenden Frontblech-Seitenteilen (4) und einem die Frontblech-Seitenteile (4) miteinander verbindenden, nach dem Einschweißen der Frontblech-Seitenteile (4) einzubauenden Mittelteil (8) besteht.

2. Karosserievorderbau nach Anspruch 1, **dadurch gekennzeichnet**, daß das Mittelteil (8) mit den Frontblech-Seitenteilen (4) verschraubt ist.

3. Karosserievorderbau nach den Ansprüchen 1 oder 2, **dadurch gekennzeichnet**, daß die Frontblech-Seitenteile (4) zur Fahrzeugmitte hin weiter nach vorn ragen als zur Fahrzeugseite.

4. Karosserievorderbau nach zumindest einem der vorangehenden Ansprüche, **dadurch gekennzeichnet**, daß das geschlossene Kastenprofil durch Aufschweißen eines im Querschnitt trapezförmigen Verstärkungsprofils (7) auf ein in einer vertikalen Ebene verlaufendes Seitenblech (6) des Frontblech-Seitenteils (4) gebildet ist.

5. Karosserievorderbau nach Anspruch 4, **dadurch gekennzeichnet**, daß das Verstärkungsprofil (7) jeweils an der Seite der Radeinbaustrebe (1) und an der zur Fahrzeugmitte hin weisenden Seite einen schräg nach unten gerichteten Bereich (12, 13) hat.

## Claims

1. Front end of body for a motor vehicle, in which from A-pillars in each case two wheel fitting struts (1) extend forwards and are connected to each other at their front end by a front panel (9) which has two lateral headlamp recesses (5), characterised in that the front panel (9) consists of two front panel side portions (4) which are constructed as a closed box profile at least in the upper region and each welded to a wheel fitting strut (1) and have a headlamp recess (5), and a central portion (8) which connects the front panel side portions (4) to each other and is to be fitted after welding in the front panel side portions (4).

2. Front end of body according to claim 1, characterised in that the central portion (8) is bolted to the front panel side portions (4).

3. Front end of body according to claim 1 or 2, characterised in that the front panel side portions (4) extend further forwards towards the centre of the vehicle than to the side of the vehicle.

4. Front end of body according to one or more of the preceding claims, characterised in that the closed box profile is formed by welding a reinforcing profile (7) of trapezoidal cross-section onto a side panel (6) of the front panel side portion (4), which side panel (6) extends in a vertical plane.

5. Front end of body according to claim 4, characterised in that the reinforcing profile (7) has a downwardly sloping region (12, 13) in each case on the side of the wheel fitting strut (1) and on the side facing towards the centre of the vehicle.

## Revendications

1. Structure avant de carrosserie pour un véhicule automobile, dans laquelle deux longerons de passage de roue (1) s'étendent vers l'avant à partir des colonnes A, lesquels longerons sont reliés entre eux à leur extrémité antérieure par une tôle frontale (9) qui présente deux logements (5) de montage de phares, caractérisée en ce que la tôle frontale (9) est formée de deux éléments latéraux (4) qui, au moins dans la partie supérieure, sont fermés pour former un profilé en caisson, sont soudés chacun à un longeron de passage de roue (1) et comportent un logement de phare (5) ainsi que d'un élément intermédiaire (8) qui relie entre eux les éléments latéraux (4) et est monté après soudage des éléments latéraux (4).

2. Structure avant de carrosserie selon la revendication 1, caractérisée en ce que l'élément intermédiaire (8) est vissé aux éléments latéraux (4).

3. Structure avant de carrosserie selon les revendications 1 ou 2, caractérisée en ce que les éléments latéraux (4) sont plus fortement saillants vers le milieu que vers les côtés du véhicule.

4. Structure avant de carrosserie selon au moins une des revendications précédentes, caractérisée en ce que le profilé en forme de caisson fermé est obtenu par soudage d'un profilé de renfort (7) à section trapézoïdale sur une tôle de côté (6) de l'élément latéral (4), qui s'étend dans un plan vertical .

5. Structure avant de carrosserie selon la revendication 4, caractérisée en ce que, sur le côté du longeron de passage de roue (1) et sur le côté tourné vers le milieu du véhicule, le profilé de renfort (7) comporte une partie (12, 13) qui s'étend en biais vers le bas.
